# EUROPEAN PATENT APPLICATION

(11) **EP 4 564 463 A1**
(43) Date of publication of application: **04.06.2025**
(21) Application number: 23846466.3
(22) Date of filing: 24.07.2023
(51) Int. Cl.: H01M 4/139, B05D 1/36, B05D 5/12, B05D 7/24, H01M 4/04, H01M 4/62

(54) **METHOD FOR PRODUCING MOLDED BODY FOR SHEET-LIKE ELECTRODES**

(30) Priority: 28.07.2022 JP 2022120969
(71) Applicant: FUJIFILM Corporation, Tokyo 106-8620 (JP)
(72) Inventor: IWASE, Eijiro, ashigara-shi, Kanagawa 250-0193 (JP); KODAMA, Taiga, ashigara-shi, Kanagawa 250-0193 (JP)
(74) Representative: Meissner Bolte Partnerschaft mbB
(86) International application number: PCT/JP2023/027040
(87) International publication number: WO 2024/024736

(57) **Abstract**

Provided is a manufacturing method of a molded body for a sheet-like electrode, the manufacturing method including: a first step of applying a first material containing an electrode active material and an electrolytic solution onto a support to form a first film of the first material; and a second step of applying a second powder material containing an electrode active material and containing no liquid component onto the first film, in which an electrode material film having a monolayer structure, which is a mixture of the first film and the second powder material, is formed.

## Description

### BACKGROUND OF THE INVENTION

### 1. Field of the Invention

The present disclosure relates to a manufacturing method of a molded body for a sheet-like electrode.

### 2. Description of the Related Art

In recent years, development of a semi-solid state battery has been studied.

An electrode applied to the semi-solid state battery is manufactured using, for example, an electrode material containing at least an electrode active material which is a powder and an electrolytic solution.

For example, JP2017-183079A discloses a method of forming an electrode having a configuration in which an active material layer including a first active material layer and a second active material layer is held on a collector, by applying a paste for forming the first active material layer onto the collector to form the first active material layer, and then applying a paste for forming the second active material layer, which has a higher solid content than the paste for forming the first active material layer, onto the first active material layer to form the second active material layer.

In addition, JP2018-147807A discloses a manufacturing method of an electrode for a secondary battery, including forming a first layer by molding first wet granules having a first solid content ratio in a film shape, forming a second layer by molding second wet granules having a second solid content ratio higher than the first solid content ratio in a film shape, and supplying the first layer, the second layer, and a collector to a roll gap between a pair of rotating rolls to form an electrode mixture layer in which the second layer and the first layer are laminated in this order on a surface of the collector.

### SUMMARY OF THE INVENTION

As the electrode applied to the semi-solid state battery, a technique of applying a molded body for a sheet-like electrode having a monolayer structure, which contains a solid component such as an electrode active material at a high concentration as compared with an electrolytic solution, is desired to increase an energy density.

In order to obtain the molded body for a sheet-like electrode, which contains a solid component such as an electrode active material at a high concentration, a method of using an electrode material containing the solid component such as an electrode active material at a high concentration as compared with an electrolytic solution and molding the electrode material film having a monolayer structure on a support may be used. However, in the electrode material containing the solid component at a high concentration, it is difficult to mix the electrolytic solution and the solid component in a uniform state, and the obtained electrode material film may have unevenness in the concentration of solid components in an in-plane direction. In addition, even in a case where the electrode material containing the solid component such as an electrode active material at a high concentration as compared with the electrolytic solution can be mixed in a uniform state, the electrode material has a small adhesive force to the support, and it is difficult to form the electrode material film on the support.

Therefore, the present disclosure has been made in view of the above-described circumstances.

An object of one embodiment of the present disclosure is to provide a manufacturing method of a molded body for a sheet-like electrode having a monolayer structure, with which it is possible to manufacture, on a support, a molded body for a sheet-like electrode having a monolayer structure, which has a high concentration of solid components and has a small unevenness in the concentration of solid components in an in-plane direction.

The present disclosure includes the following aspects.
<1> A manufacturing method of a molded body for a sheet-like electrode, the manufacturing method comprising:
   a first step of applying a first material containing an electrode active material and an electrolytic solution onto a support to form a first film of the first material; and
   a second step of applying a second powder material containing an electrode active material and containing no liquid component onto the first film,
   in which an electrode material film having a monolayer structure, which is a mixture of the first film and the second powder material, is formed.
<2> The manufacturing method of a molded body for a sheet-like electrode according to <1>,
   in which the second step is a step of applying the second powder material containing an electrode active material and containing no liquid component onto the first film, and then leveling the second powder material applied onto the first film by a molding member to regulate a thickness of a laminated product of the first film and the second powder material.
<3> The manufacturing method of a molded body for a sheet-like electrode according to <2>,
   in which the molding member is a blade or a roller.
<4> The manufacturing method of a molded body for a sheet-like electrode according to <2>,
   in which, in the second step, the second powder material applied onto the first film is leveled by a vibrating blade or roller.
<5> The manufacturing method of a molded body for a sheet-like electrode according to <1>,
   in which the second step is a step of applying the second powder material containing an electrode active material and containing no liquid component onto the first film, placing a film on the second powder material applied onto the first film, and then pressing the second powder material from above the film by a molding member to level the second powder material applied onto the first film and regulate a thickness of a laminated product of the first film and the second powder material.
<6> The manufacturing method of a molded body for a sheet-like electrode according to any one of <2> to <5>, further comprising:
   a third step of compressing the laminated product with a regulated thickness, which is obtained in the second step by leveling the second powder material applied onto the first film to regulate the thickness of the first film and the second powder material, with a vibrating pressurizing member.
<7> The manufacturing method of a molded body for a sheet-like electrode according to any one of <1> to <6>,
   in which a concentration of solid components of the first material is 5% by volume to 48% by volume.
<8> The manufacturing method of a molded body for a sheet-like electrode according to any one of <1> to <7>,
   in which the electrode material film having a monolayer structure has a thickness of 50 µm to 250 µm and a concentration of solid components of 50% by volume to 80% by volume.

According to one embodiment of the present disclosure, it is possible to provide a manufacturing method of a molded body for a sheet-like electrode having a monolayer structure, with which it is possible to manufacture, on a support, a molded body for a sheet-like electrode having a monolayer structure, which has a high concentration of solid components and has a small unevenness in the concentration of solid components in an in-plane direction.

### BRIEF DESCRIPTION OF THE DRAWINGS

Fig. 1 is a schematic cross-sectional view for describing a first step and a second step in the manufacturing method of a molded body for an electrode according to the present disclosure.
Fig. 2 is a schematic cross-sectional view for describing an aspect in which a second powder material applied onto a first film is leveled by a molding member in the second step.
Fig. 3 is a schematic cross-sectional view for describing an aspect in which the second powder material applied onto the first film is leveled by a molding member in the second step.
Fig. 4 is a schematic cross-sectional view for describing a step of pressurizing an electrode material film having a monolayer structure.

### DESCRIPTION OF THE PREFERRED EMBODIMENTS

Hereinafter, embodiments of the present disclosure will be described with reference to the accompanying drawings. The present disclosure is not limited in any way to the following embodiments, and may be implemented with appropriate modifications within the scope of the purpose of the present disclosure. The constituent elements indicated by the same reference numeral in each drawing mean the same constituent element. The description of redundant constitutional elements and reference numerals in each drawing may be omitted. A dimensional ratio in the drawings does not necessarily represent the actual dimensional ratio.

In the present disclosure, the numerical ranges shown using "to" indicate ranges including the numerical values described before and after "to" as the lower limit value and the upper limit value. Regarding numerical ranges that are described stepwise in the present disclosure, an upper limit value or a lower limit value described in a numerical range may be replaced with an upper limit value or a lower limit value of another stepwise numerical range. In addition, in a numerical range described in the present disclosure, an upper limit or a lower limit described in a certain numerical range may be replaced with a value described in Examples.

In the present disclosure, a term "step" denotes not only an individual step but also a step which is not clearly distinguishable from another step as long as an effect expected from the step can be achieved.

In the present disclosure, "(meth)acrylic" means either or both of acrylic and methacrylic.

In the present disclosure, in a case where a plurality of substances corresponding to each component in a composition is present, the amount of each component in the composition means the total amount of the plurality of substances present in the composition, unless otherwise specified.

In the present disclosure, a combination of two or more preferred aspects or forms is a more preferred aspect or form.

In the present disclosure, "solid component" means a component in a solid state at 25°C and 1 atm, and "liquid component" means a component in a liquid state at 25°C and 1 atm.

In the present disclosure, "width" in the support refers to a length of a direction orthogonal to a longitudinal direction, and refers to a length of a direction orthogonal to the longitudinal direction in a case of a long support.

In addition, "width direction" in a film forming member (for example, a blade) refers to a direction orthogonal to a direction in which the film forming member relatively is moved along a surface of a support (that is, a direction in which an electrode material film is formed on the support). That is, the "width direction" of the blade also corresponds to "width direction" of the electrode material film.

### <Manufacturing method of molded body for sheet-like electrode>

The manufacturing method of a molded body for a sheet-like electrode according to the present disclosure is a manufacturing method of a molded body for a sheet-like electrode, including a first step of applying a first material containing an electrode active material and an electrolytic solution onto a support to form a first film of the first material and a second step of applying a second powder material containing an electrode active material and containing no liquid component onto the first film, in which an electrode material film having a monolayer structure, which is a mixture of the first film and the second powder material, is formed.

Hereinafter, the "molded body for a sheet-like electrode" will also be simply referred to as "molded body for an electrode".

In addition, in the present disclosure, the "electrode material film having a monolayer structure" means that there is no interface in the electrode material film.

In addition, confirmation of whether or not the electrode material film having a monolayer structure is obtained in the manufacturing method of a molded body for an electrode according to the present disclosure is performed by, for example, the following method. First, an electrode material having a desired high concentration of solid components (for example, 70% by volume) is prepared, and an electrode material film having a monolayer structure with a size of, for example, approximately 3 cm × 2 cm is produced using the electrode material, a punch, and a push frame. The mass and the thickness of the obtained electrode material film are measured, and these are used as a standard for an electrode material film having a concentration of solid components of 70% by volume. Next, in the manufacturing method of a molded body for an electrode according to the present disclosure, in a case where an electrode material film having a concentration of solid components of 70% by volume is formed, and the thickness and the mass of the obtained electrode material film are measured, and the measured values have the same tendency as the above-described standard, it can be presumed that the electrode material film has a monolayer structure. In addition, by using a soft X-ray inspection device, the density of the electrode material film in the thickness direction can be measured; and it can be confirmed that the electrode material film is a monolayer structure since there is no difference in the measured density in the thickness direction or there is no abnormality (such as a large void).

In the present disclosure, the electrode material film having a monolayer structure preferably has a thickness of 50 µm to 250 µm and a concentration of solid components of 50% by volume to 80% by volume. That is, in the manufacturing method of a molded body for an electrode according to the present disclosure, it is preferable to form an electrode material film having a single-layer structure with a thickness of 50 µm to 250 µm and a concentration of solid components of 50% by volume to 80% by volume.

In the present disclosure, "high concentration of solid components" means that the concentration of solid components is 50% by volume or more.

Here, the thickness of the electrode material film having a monolayer structure is an arithmetic average value of thicknesses at three points measured by cross-sectional observation. In the cross-sectional observation, a known microscope (for example, a scanning electron microscope) can be used.

In addition, the concentration of solid components in the electrode material film is calculated from a compositional ratio of each component contained in the electrode material film and a specific gravity of the components.

As described above, in a case where an electrode material film having a monolayer structure is formed on a support using an electrode material containing a solid component at a high concentration, unevenness in the concentration of solid components may occur in the obtained electrode material film in an in-plane direction.

Therefore, the present inventors have conducted studies on a technique for reducing the unevenness of the concentration of solid components in the in-plane direction, and have found that a molded body for a sheet-like electrode having a monolayer structure, in which the concentration of solid components is high and the unevenness of the concentration of solid components in the in-plane direction is small, can be manufactured by forming, on a support, a first film formed of a first material containing an electrolytic solution and an electrode active material, and applying, onto the first film, a second powder material containing an electrode active material and not containing a liquid component.

As described above, it is presumed that, in a case where the second material containing an electrode active material and not containing a liquid component is applied onto the first film containing an electrolytic solution and an electrode active material, the liquid component (for example, the electrolytic solution) in the first film infiltrates between the solid components (that is, between the powders) in the second powder material due to capillary action. As a result, the first film and the second powder material are mixed, and an electrode material film having a monolayer structure, in which the concentration of solid components is high but the unevenness of the concentration of solid components in the in-plane direction is small, is obtained. The obtained electrode material film can be used as it is, or can be pressurized to obtain a molded body for a sheet-like electrode. Therefore, according to the manufacturing method of a molded body for an electrode according to the present disclosure, it is possible to manufacture a molded body for a sheet-like electrode, which has a high concentration of solid components and has less unevenness in the concentration of solid components in the in-plane direction.

JP2017-183079A and JP2018-147807A disclose the formation of an electrode layer (corresponding to an electrode material film in the present disclosure) having a two-layer structure, but do not disclose the formation of an electrode layer having a monolayer structure.

### [First step]

In the first step, a first material containing an electrode active material and an electrolytic solution is applied onto a support to form a first film of the first material.

Hereinafter, the "first material containing an electrode active material and an electrolytic solution" will also be simply referred to as "first material".

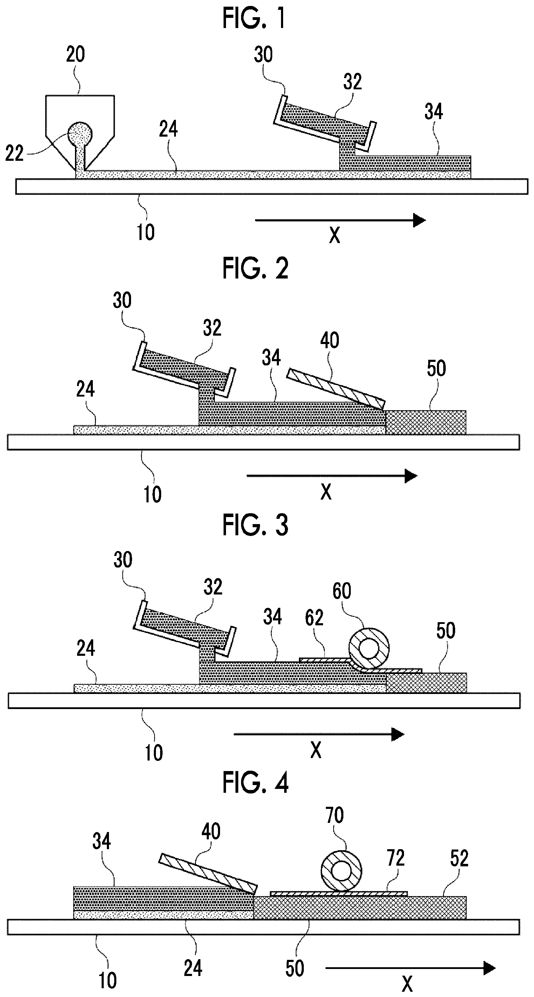

Here, the first step will be described with reference to Fig. 1. In the first step, a first material 22 is continuously applied onto a support 10 moving in an arrow X direction using an applying unit 20 in which the first material 22 is stored, and thus a first film 24 is formed of the first material. Fig. 1 is a schematic cross-sectional view for describing the first step and the second step in the manufacturing method of a molded body for an electrode according to the present disclosure.

### (Support)

In the first step, a support is used.

The support used in the first step is not particularly limited as long as it is a support capable of forming an electrode material film on the surface. In particular, from the viewpoint of continuously forming the electrode material film, it is preferable to use a long support. In a case of the long support, a width thereof may be determined according to the size of the electrode material film, a width of a molding member described later (for example, a blade or a roller) in a width direction, and the like.

Details of the support will be described later.

### (First material)

The first material used in the first step contains an electrode active material and an electrolytic solution.

From the viewpoint of ease of forming the first film, a concentration of solid components in the first material is preferably 5% by volume to 48% by volume, more preferably 15% by volume to 40% by volume, and still more preferably 20% by volume to 35% by volume.

In other words, from the viewpoint of ease of forming the first film, a concentration of liquid components in the first material is preferably 52% by volume to 95% by volume, more preferably 60% by volume to 85% by volume, and still more preferably 65% by volume to 80% by volume.

In a case where the concentration of the solid components and the concentration of the liquid components are within the above-described ranges, it is easy to form the first film having a target thickness and a target concentration of solid components.

The first material contains an electrode active material and an electrolytic solution, and may further contain a conductive auxiliary agent and other components as necessary.

A content of the electrode active material with respect to the total volume of the first material is preferably 5% by volume to 48% by volume, more preferably 15% by volume to 40% by volume, and still more preferably 25% by volume to 35% by volume.

A content of the electrolytic solution with respect to the total volume of the first material is preferably 95% by volume to 52% by volume, more preferably 85% by volume to 60% by volume, and still more preferably 75% by volume to 65% by volume.

A content of the conductive auxiliary agent with respect to the total volume of the first material is preferably 0.05% by volume to 5% by volume, more preferably 0.1% by volume to 3% by volume, and still more preferably 0.25% by volume to 2% by volume.

In a case where the first material contains other components, a content of the other components with respect to the total volume of the first material is preferably 0.01% by volume to 1% by volume, more preferably 0.05% by volume to 0.75% by volume, and still more preferably 0.1% by volume to 0.5% by volume.

Details of the electrode active material, the electrolytic solution, the conductive auxiliary agent, and other components contained in the first material will be described later.

### (Application of first material)

In the first step, the above-described first material is applied onto the support.

The applying unit in a case of applying the above-described first material onto the support may be any unit as long as the first material can be applied in a necessary amount onto the support; and for example, the applying unit may be selected according to the viscosity of the above-described first material, the thickness of the first film to be formed, and the like.

The applying unit may be a unit which applies a film-shaped first material onto the support, in addition to a unit which can apply a necessary amount of the first material onto the support. Specific examples of the applying unit include a unit for intermittently or continuously supplying the first material onto the support (for example, a unit using a hopper, screen printing, or the like), and various coating units (for example, coating units using a slit coating method, bar coating, blade coating, or the like).

### (Formation of first film)

In the first step, the first film is formed on the support. From the viewpoint of increasing uniformity of the thickness of the electrode material film, it is preferable that the first film has high thickness uniformity.

The formation of the first film may be a method of forming a first film having excellent thickness uniformity by smoothing the first material intermittently or continuously supplied onto the support, or may be a method of applying a film-shaped first material onto the support having excellent thickness uniformity by adopting a coating unit as the applying unit for the first material.

A unit for leveling the first material supplied onto the support is not particularly limited, and the same unit as the molding member (specifically, a blade, a roll, or the like) described later can be used.

A thickness of the first film may be appropriately determined according to the thickness of the electrode material film to be formed and the concentration of solid components.

From the viewpoint of easily obtaining the electrode material film having a monolayer structure with a thickness and a concentration of solid components within the above-described ranges, the thickness of the first film is, for example, preferably 5 µm to 150 µm, more preferably 20 µm to 125 µm, and still more preferably 25 µm to 100 µm.

As shown in Fig. 1, in a case where the first film is formed on the support, an aspect in which the support 10 is moved in the arrow X direction with respect to the applying unit 20 of the first material, which is fixed, is shown, but the present invention is not limited to this aspect.

In a case of forming the first film, it is preferable that the surface of the support and the applying unit of the first material are moved relative to each other; and in addition to the above-described aspect, an aspect in which the applying unit of the first material is moved in one direction with respect to the fixed support may be adopted, or an aspect in which both the support and the applying unit of the first materialare moved in one direction may be adopted.

However, in order to continuously form the electrode material film, that is, in order to form an electrode material film which is a continuous film, an aspect in which a long support is transported and moved with respect to the fixed blade is preferable.

### [Second step]

In the second step, a second powder material which contains an electrode active material and does not contain a liquid component is applied onto the first film.

Hereinafter, the "second powder material which contains an electrode active material and does not contain a liquid component" will also be simply referred to as "second powder material".

Here, the second step will be described with reference to Fig. 1. In the second step, a second powder material 32 is applied onto the first film 24 on the support 10 moving in the arrow X direction using an applying unit 30 in which the second powder material 32 is stored. As a result, a second film 34 formed of the second powder material 32 can be formed on the first film 24. The electrolytic solution of the first film 24 infiltrates the second film 34 due to capillary action, and the first film 24 and the second film (second powder material) 34 are mixed to form an electrode material film (not shown) having a monolayer structure.

### (Second powder material)

The second powder material used in the second step contains an electrode active material, and does not contain a liquid component.

In the present disclosure, the "does not contain a liquid component" means "substantially does not contain a liquid component". The expression "substantially does not contain a liquid component" means that a content of solid components with respect to the total volume of the second powder material is 100% by volume, or means that the presence of a liquid component which has been mixed in unavoidably is allowed, but the presence of a liquid component which has been added intentionally is not allowed.

In addition, the term "second powder material" means that a material constituting the second powder material is a powder.

That is, in a case where the second powder material contains only an electrode active material which is a powder and a solid component, the second powder material may contain the electrode active material which is a powder and a solid component and a component (for example, a conductive auxiliary agent) other than the electrode active material which is a powder and a solid component.

The second powder material contains an electrode active material, and may further contain, as necessary, a conductive auxiliary agent and a component (for example, an electrolyte such as ethylene carbonate) which is a powder and a solid component, among other components.

A content of the electrode active material with respect to the total volume of the second powder material is preferably 90% by volume to 100% by volume, more preferably 95% by volume to 99.9% by volume, and still more preferably 97% by volume to 99.5% by volume.

A content of the conductive auxiliary agent with respect to the total volume of the second powder material is preferably 10% by volume to 0% by volume, more preferably 5% by volume to 0.1% by volume, and still more preferably 3% by volume to 0.5% by volume.

In a case where a component which is a powder and a solid component is included in the other components, a content of the component which is a powder and a solid component among the other components with respect to the total volume of the second powder material is preferably 1% by volume to 0.01% by volume, more preferably 0.5% by volume to 0.05% by volume, and still more preferably 0.25% by volume to 0.1% by volume.

It is preferable that the electrode active material, the conductive auxiliary agent, and the other components contained in the second powder material are the same as the electrode active material, the conductive auxiliary agent, and the other components contained in the first film.

Details of the components which are powder and solid components among the electrode active material, the conductive auxiliary agent, and the other components contained in the second powder material will be described later.

### (Application of second powder material)

In the second step, the above-described second powder material is applied onto the first film formed on the support.

The applying unit in a case of applying the above-described second powder material onto the first film may be any unit as long as the second powder material can be applied in a necessary amount onto the first film; and for example, the applying unit may be selected according to the bulk viscosity of the above-described second powder material, the thickness of the second film to be formed, and the like.

Specific examples of the applying unit include a unit for intermittently or continuously supplying the second powder material onto the first film (for example, a hopper, a screw feeder, a disc feeder, a vibration feeder, or the like), and a plurality of these units may be combined.

From the viewpoint of homogenizing the application of the second powder material onto the first film, a restriction frame, a mesh frame, or the like may be used in addition to the above-described applying unit.

### (Preferred aspect)

It is presumed that, in a case where the second powder material is applied onto the first film in the second step, the liquid component (for example, the electrolytic solution) in the first film infiltrates into the solid components in the second powder material (that is, the powder) due to the capillary action, and the first film and the second powder material are mixed with each other, whereby an electrode material film having a monolayer structure is formed.

In the second step, it is preferable that the second powder material is applied onto the first film, and then the second powder material applied onto the first film is leveled to regulate a thickness of a laminated product of the first film and the second powder material.

In a case where the second powder material is applied onto the first film, a laminated product of the first film and the second powder material is obtained, and the thickness of the laminate of the first film and the second powder material is regulated by leveling the second powder material applied onto the first film.

In this way, by leveling the second powder material applied onto the first film and regulating the thickness of the laminated product of the first film and the second powder material, pressure is applied to both the first film and the second powder material, the mixing of the first film and the second powder material is promoted, and discharge of the gas (specifically, air) contained in the second powder material is promoted. As a result, an electrode material film having a monolayer structure, in which the concentration of solid components is high and the uniformity of the concentration of solid components in the in-plane direction is high, is easily formed.

Hereinafter, preferred aspects of the second step will be described.

### -Aspect using molding member-

In the second step, it is preferable that the second powder material containing an electrode active material and containing no liquid component is applied onto the first film, and then the second powder material applied onto the first film is leveled by a molding member.

In addition, in the second step, it is also preferable that the second powder material containing an electrode active material and containing no liquid component is applied onto the first film, a film is placed on the second powder material applied onto the first film, and then the second powder material is pressed from above the film by a molding member to level the second powder material applied onto the first film and regulate a thickness of a laminated product of the first film and the second powder material.

Here, the molding member is not particularly limited as long as it is a member capable of flattening the surface of the second powder material, and examples thereof include a plate-shaped member such as a blade and a scraper, a roller, a flat plate press machine, and a roll press machine. Among these, from the viewpoint of easily controlling and easily homogenizing the thickness of the electrode material film, a blade or a roller is preferable as the molding member. As a member which transmits vibration, an ultrasonic vibration horn, a piezoelectric vibration horn, or the like may be connected to the molding member. In a case where the member which transmits vibration is connected to the molding member, the molding member can be vibrated. In particular, it is preferable to use a molding member which is ultrasonically vibrated.

The leveling of the second powder material applied onto the first film by the molding member and the regulation of the thickness of the laminated product of the first film and the second powder material will be described with reference to Figs. 2 and 3. Figs. 2 and 3 are schematic cross-sectional views for describing an aspect in which the second powder material applied onto the first film is leveled by the molding member in the second step. Fig. 2 shows an example in which a blade is used as the molding member. **In** addition, Fig. 3 shows an example in which a roller is used as the molding member, and a film is interposed between the roller and the second powder material.

**In** the example shown in Fig. 2, the second film 34 of the second powder material 32, applied onto the first film 24 formed on the support 10, is leveled using a blade 40 which is a molding member, and the thickness of the laminated product of the first film 24 and the second film 34 of the second powder material 32 is regulated. **In** this case, it can be said that the laminated product of the first film 24 and the second film 34 is pressurized by the blade 40.

As shown in Fig. 2, the blade 40 is installed such that a distal end is in contact with the second film 34 and a constant distance is maintained from the surface of the support 10. By moving the blade 40 on the support 10 in the arrow X direction, a void between the surface of the support 10 and the distal end of the blade 40 is passed through the laminated product of the first film 24 and the second film 34 formed on the support 10, and thus the laminated product is pressed and the second film 34 is leveled. In addition, at this time, the thickness of the laminated product can be regulated to the same thickness as the above-described void. As described above, in a case where the laminated product is pressed by the blade 40, the first film 24 and the second film (that is, the second powder material) 34 are mixed with each other, and an electrode material film 50 having a monolayer structure is obtained.

In the example shown in Fig. 3, the second film 34 of the second powder material 32, applied onto the first film 24 formed on the support 10, is leveled using a roller 60 which is a molding member through a film 62, and the thickness of the laminated product of the first film 24 and the second film 34 of the second powder material 32 is regulated. In this case, it can be said that the laminated product of the first film 24 and the second film 34 is pressurized by the roller 60.

As shown in Fig. 3, the roller 60 is installed such that an outer peripheral surface is in contact with the second film 34 and a constant distance is maintained from the surface of the support 10. By moving the roller 60 on the support 10 in the arrow X direction, a void between the surface of the support 10 and the distal end of the roller 60 is passed through the laminated product of the first film 24 and the second film 34 formed on the support 10, and thus the laminated product is pressed and the second film 34 is leveled. In the example shown in Fig. 3, the film 62 is interposed between the second film 34 and the roller 60. By interposing the film 62, volatilization of the electrolytic solution from the laminated product can be suppressed. The roller 60 rotates while coming into contact with the laminated product of the first film 24 and the second film 34 through the film 62, so that the laminated product can be densified and the thickness can be regulated. As described above, in a case where the laminated product is pressed by the roller 60, the first film 24 and the second film (that is, the second powder material) 34 are mixed with each other, and an electrode material film 50 having a monolayer structure is obtained.

In a case where the volatilization of the electrolytic solution from the laminated product is allowed, the above-described film 62 can be omitted.

As described above, the laminated product of the first film and the second film is pressurized by the molding member such as the blade and the roller. In this case, the laminated product of the first film and the second film may be pressurized by the molding member until the thickness of the electrode material film having a monolayer structure obtained after the pressurization reaches the above-described thickness, specifically, the set thickness in a range of 50 µm to 250 µm.

It is preferable to use a vibrating blade or roller as the molding member.

In other words, in the second step, it is preferable to level the second powder material applied onto the first film by the vibrating blade or roller.

Since the molding member such as the blade and the roller vibrates, the mixing of the first film and the second powder material is further promoted, and the discharge of the gas (specifically, air) contained in the second powder material is also promoted. As a result, it is possible to form an electrode material film having a monolayer structure, which has a high concentration of solid components and has excellent uniformity of the concentration of solid components in the in-plane direction.

The vibration direction in a case where the molding member vibrates is not particularly limited. In addition, the vibration of the molding member may be continuous or intermittent.

An amplitude of the vibration of the molding member is, for example, preferably 0.1 µm to 60 µm and more preferably 1 µm to 10 µm.

In addition, a frequency of the vibration of the molding member is, for example, preferably 50 Hz to 40,000 Hz and more preferably 100 Hz to 37,500 Hz. The frequency of the vibration of the molding member may include a plurality of frequencies. For example, the vibration of the molding member may be a vibration in which a plurality of frequency peaks of 150 Hz, 300 Hz, and 450 Hz are detected.

Here, the amplitude and the frequency of the vibration can be measured using an acceleration sensor or a vibration measuring instrument. In a case where a plurality of frequency peaks are detected during the measurement of the vibration of the molding member, a frequency having the smallest value is referred to as the "frequency of the vibration of the molding member", and an amplitude at this frequency is referred to as the "amplitude of the vibration of the molding member". For example, in a case where a plurality of frequency peaks of 150 Hz, 300 Hz, and 450 Hz are detected for the vibration of the molding member, 150 Hz is defined as the "frequency of the vibration of the molding member", and an amplitude at the frequency of 150 Hz is defined as the "amplitude of the vibration of the molding member".

In the second step, an aspect in which the support 10 is moved in the arrow X direction with respect to the fixed blade 40 in Fig. 2 and the fixed roller 60 in Fig. 3 is shown, but the present invention is not limited to this aspect.

In a case of leveling the second powder material applied onto the first film formed on the support, it is preferable that the surface of the support and the molding member are moved relative to each other; and in addition to the above-described aspect, an aspect in which the molding member is moved in one direction with respect to the fixed support may be adopted, or an aspect in which both the support and the molding member are moved in one direction may be adopted.

However, in order to continuously form the electrode material film, that is, in order to form an electrode material film which is a continuous film, an aspect in which a long support is transported and moved with respect to the fixed molding member is preferable.

Here, a known transporting unit can be used as a unit for moving the support. As the transport unit of the support, specifically, for example, a belt conveyor, a linear motion guide, a cross roller table, or the like can be used.

In the second step, the second powder material is applied onto the first film on the support to form the second film, and then the laminate of the support, the first film, and the second film can be divided in a plane direction of the support. It is preferable that the laminate is divided before the second powder material applied onto the first film is leveled by the molding member, that is, before the second film is leveled by the molding member.

That is, in the manufacturing method of a molded body for an electrode according to the present disclosure, the second step is a step of applying the second powder material containing an electrode active material and containing no liquid component onto the first film to form the second film of the second powder material, and it is preferable to further include a third step of dividing the laminate obtained by the second step, in which the support, the first film, and the second film are laminated in this order, in the plane direction of the support.

In this aspect, a laminate having a large area is formed, and then the laminate is divided into laminates having a smaller area (for example, an area of an electrode).

It is preferable to further include a step of leveling the second film by the molding member after the step of dividing, in the plane direction of the support, the laminate in which the support, the first film, and the second film are laminated in this order.

That is, in the manufacturing method of a molded body for an electrode according to the present disclosure, the second step is a step of applying the second powder material containing an electrode active material and containing no liquid component onto the first film to form the second film of the second powder material, and it is preferable to further include a third step of dividing the laminate obtained by the second step, in which the support, the first film, and the second film are laminated in this order, in the plane direction of the support, and a fourth step of leveling the second film in the laminate divided with a film forming material.

In the above-described aspect, it is preferable to use a support in which at least the surface in contact with the first film can be divided in the plane direction in advance.

As the above-described support, for example, a support in which a plurality of metal layers (layers serving as a collector) having a desired size are arranged on a resin film to be spaced from each other, a resin film portion between the metal layers is bent toward a side opposite to the metal layer side, and the spaced metal layers are brought into contact with each other without a gap may be used. In such a support, the space between the metal layers in contact with each other without a gap can be divided to divide, in the plane direction of the support, the laminate in which the support, the first film, and the second film are laminated in this order.

### [Third step]

In the manufacturing method of a molded body for an electrode according to the present disclosure, it is preferable to further include a third step of compressing the laminated product with a regulated thickness (specifically, the electrode material film having a monolayer structure), which is obtained in the second step by leveling the second powder material applied onto the first film to regulate the thickness of the first film and the second powder material, with a vibrating pressurizing member.

By including the third step, the first film and the second powder material in the laminated product can be further mixed. In addition, by including the third step, the density of the laminated product can be increased, and the in-plane uniformization of the density and the thickness of the solid components can be achieved. As a result, it is possible to obtain an electrode material film having a monolayer structure, which has a high concentration of solid components and has higher uniformity of the concentration of solid components in the thickness direction.

### (Compression of laminate)

In the present step, for example, the laminate having a regulated thickness (specifically, the electrode material film having a monolayer structure) can be compressed with a vibrating pressurizing member with a method shown in Fig. 4. Fig. 4 is a schematic cross-sectional view for describing the step of compressing the electrode material film having a monolayer structure (the laminate after the thickness is regulated) with a vibrating pressurizing member.

Fig. 4 shows a step of leveling the second film 34 using a blade 40 to level the first film and the second powder material on the support 10, regulating the thickness of the laminated product of the first film and the second powder material, forming the electrode material film having a monolayer structure (corresponding to the laminate having a regulated thickness) 50, and then compressing the formed electrode material film 50 having a monolayer structure with a vibrating pressurizing member. In the example shown in Fig. 4, a film 72 is placed on the electrode material film 50 having a monolayer structure, which is formed on the support 10, and a pressurization roller (an example of the pressurizing member) 70 which vibrates on the film 72 is pressed against the film 72 to pressurize the electrode material film 50 having a monolayer structure. In a case where the electrode material film 50 is pressurized, a compressed electrode material film 52 is obtained.

The present step is not limited to the aspect shown in Fig. 4, and a method using a press machine, a pressurization plate, and a pressurization roller pair, which can vibrate, may be used as the pressurizing member. In addition, examples of the method of vibrating the pressurizing member in the present step include a method of connecting an exciter, a vibration horn, or the like to the pressurizing member described above.

In a case of compressing the electrode material film, a pressure is preferably 0.01 MPa to 100 MPa, more preferably 0.1 MPa to 50 MPa, and particularly preferably 0.2 MPa to 10 MPa.

In addition, it is preferable that the amplitude of the vibration of the pressurizing member and the frequency of the vibration of the pressurizing member are the same as the amplitude of the vibration of the molding member and the frequency of the vibration of the molding member under the same conditions, respectively.

In the present step, it is preferable to use a pressurizing member which is ultrasonically vibrated, from the viewpoint of further reducing the unevenness of the concentration of solid components in the in-plane direction.

In the present step, the pressurizing member which vibrates is used, but the pressurizing member may not be vibrated. That is, the second powder material applied onto the first film may be leveled, the thickness of the laminated product of the first film and the second powder material may be regulated, and then the laminate having a regulated thickness (specifically, the electrode material film having a monolayer structure) may be compressed with a non-vibrating pressurizing member.

In addition, in the present step, the electrode material film may be pressurized (compressed) stepwise by appropriately changing the pressurizing member, the pressurizing conditions, and the like.

In the present step, it is preferable to move the pressurizing member and the laminated product (specifically, the support on which the electrode material film has been formed) relative to each other.

In the present disclosure, "moving the pressurizing member and the laminated product relative to each other" includes moving the pressurizing member in one direction with respect to the laminated product, moving the laminated product in one direction with respect to the pressurizing member, and moving the pressurizing member and the laminated product in one direction, respectively; but it is preferable to move the laminated product in one direction with respect to the pressurizing member.

A unit for moving the laminated product (specifically, the support on which the electrode material film has been formed) is not limited, and known transport units can be used. Examples thereof include a belt conveyor, a linear motion guide, and a cross roller table.

In the present step, from the viewpoint of improving formability, for example, the laminated product heated at 30°C to 100°C may be pressurized (compressed).

As described above, by performing the first step and the second step (preferably, further performing the third step), it is possible to form an electrode material film having a monolayer structure, which is a mixture of the first film and the second powder material.

The electrode material film having a monolayer structure can be formed into a molded body for a sheet-like electrode as it is or by further pressurizing the film.

### [Other steps]

The manufacturing method of a molded body for an electrode according to the present disclosure may include other steps.

Examples of the other steps include a step of, in a case where the support is release paper, transferring the electrode material film formed on the release paper to a collector.

Hereinafter, the support and the molding member, which are used in the manufacturing method of a molded body for an electrode according to the present disclosure, will be described in detail.

**In** addition, the details of the components constituting the first material and the second powder material will also be described.

### [Support]

Specific examples of a preferred support include a collector.

The collector which is an example of the support is not particularly limited, and a known collector (a positive electrode collector and a negative electrode collector) can be used.

Examples of the positive electrode collector include aluminum, an aluminum alloy, stainless steel, nickel, and titanium. The positive electrode collector is preferably aluminum or an aluminum alloy. The positive electrode collector may be aluminum having, on a surface thereof, a coating layer containing one or more of carbon, nickel, titanium, silver, gold, platinum, and vanadium oxide.

Examples of the negative electrode collector include aluminum, copper, a copper alloy, stainless steel, nickel, and titanium. The negative electrode collector is preferably aluminum, copper, a copper alloy, or stainless steel, and more preferably copper or a copper alloy. The negative electrode collector may be copper or stainless steel, having, on a surface thereof, a coating layer containing one or more of carbon, nickel, titanium, silver, and lithium.

The collector is preferably an aluminum foil (including an aluminum foil having the above-described coating layer on the surface thereof) or a copper foil (including a copper foil having the above-described coating layer on the surface thereof). The aluminum foil is generally used as a collector in a positive electrode. The copper foil is generally used as a collector in a negative electrode.

In addition, the support may be a laminate of the metal layer exemplified as the positive electrode collector or the negative electrode collector described above and a resin film. Examples of the resin film used in the laminate include resin films such as a polyethylene terephthalate (PET) film, a polypropylene (PP) film, a polyethylene (PE) film, a cyclic olefin polymer (COP or COC) film, a triacetyl cellulose (TAC) film, a polyimide (PI) film, and a polyamide (PA) film.

In addition, examples of the support include a release material.

Examples of the release material which is an example of the support include release paper (for example, peeling paper manufactured by LINTEC Corporation), a film having a release layer, and paper having a release layer; and among these, release paper is preferable.

In a case where the release material is used as the support, the electrode material film formed on the release material can be transferred to the collector by utilizing releasability of the release material.

From the viewpoint of transportability and the like, a thickness of the support (preferably, the collector) is preferably 3 µm or more, more preferably 5 µm or more, and particularly preferably 10 µm or more.

From the viewpoint of flexibility and lightness, the thickness is preferably 100 µm or less, more preferably 70 µm or less, and particularly preferably 50 µm or less.

The thickness of the support is measured by the same method as the average thickness of the electrode material film having a monolayer structure.

A size of the support is not limited, and may be determined according to the size of the molded body for an electrode to be manufactured, the size of various members used in the manufacturing process, and the like.

In addition, in the present step, as a transporting unit of the support, the transporting unit of the support in the first step and the second step can be adopted.

### [Molding member]

Preferred examples of the molding member include a blade and a roller.

### (Blade)

The blade is a member having a plate-like shape, but the shape, size, material, and the like of a contact portion which comes into contact with the second powder material (or the second film) may be appropriately determined depending on physical properties (the kind of the electrode active material, the concentration of solid components, the composition (viscosity, surface tension, and the like) of the electrolytic solution, and the like) of the second powder material (or the second film), the size and thickness of the electrode material film to be formed, and the like.

In addition, it is preferable that the contact portion of the blade with the second powder material (or the second film) is less likely to have the electrode material adhere thereto; and for example, at least the surface of the blade preferably exhibits releasability.

For example, the blade may be made of a fluororesin such as polytetrafluoroethylene (PTFE) or a resin such as polyether ether ketone (PEEK), may be made of a metal such as stainless steel, aluminum, iron, or a hard alloy, or may be made of a ceramic.

In addition, in order to impart the releasability to the surface, the blade may include a surface layer (for example, a surface layer containing a fluorine-based resin, and a surface layer containing silicon-based particles and a resin) exhibiting the releasability.

Furthermore, from the viewpoint of improving abrasion resistance, the blade may include a high-hardness coating film such as titanium oxide, titanium nitride (TiN), and tungsten carbide on a metal or ceramic blade body.

### (Roller)

The roller is a member in which an outer peripheral surface is rotatable, but the shape, size, material, and the like of the roller may be appropriately determined depending on the physical properties (the kind of the electrode active material, the concentration of solid components, the composition (viscosity, surface tension, and the like) of the electrolytic solution, and the like) of the second powder material (or the second film), the size and thickness of the electrode material film to be formed, and the like.

The material constituting the outer peripheral surface of the roller may be the same as that of the blade, and may have a surface layer exhibiting releasability.

An outer diameter of the roller is not particularly limited, but may be, for example, 20 mm to 30 mm.

In addition, since the roller rotates, a friction coefficient between the outer peripheral surface of the roller and the second powder material (or the second film) can be considered to be 0. As a result, since adhesiveness to the second powder material (or the second film) may be increased, as shown in Fig. 3, it is preferable to interpose a film between the second powder material (or the second film) and the outer peripheral surface of the roller.

### [Components constituting first material and components constituting second powder material]

The first material contains at least an electrode active material and an electrolytic solution. From the viewpoint of ease of forming the first film, the concentration of solid components in the first material with respect to the total volume of the first material is preferably 10% by volume to 45% by volume, as described above.

In addition, the second powder material contains at least an electrode active material.

### (Electrode active material)

The electrode active material is a substance capable of intercalating and deintercalating ions of a metal element belonging to Group 1 or Group 2 in the periodic table. The electrode active material is included in the solid components.

Examples of the electrode active material include a positive electrode active material and a negative electrode active material.

### -Positive electrode active material-

The positive electrode active material is not limited, and a known electrode active material used for a positive electrode can be used. The positive electrode active material is preferably a positive electrode active material capable of reversibly intercalating and deintercalating lithium ions.

Specific examples of the positive electrode active material include a transition metal oxide and an element (for example, sulfur) which can be compounded with lithium. Among the above, the positive electrode active material is preferably a transition metal oxide.

The transition metal oxide is preferably a transition metal oxide containing at least one transition metal element (hereinafter, referred to as "element Ma") selected from the group consisting of cobalt (Co), nickel (Ni), iron (Fe), manganese (Mn), copper (Cu), and vanadium (V).

In a case where the transition metal oxide contains Li and the element Ma, a molar ratio (Li/Ma) of Li to Ma is preferably 0.3 to 2.2.

In addition, the transition metal oxide may contain at least one transition metal element (hereinafter, referred to as "element Mb") selected from the group consisting of a Group 1 element other than lithium, a Group 2 element, aluminum (Al), gallium (Ga), indium (In), germanium (Ge), tin (Sn), lead (Pb), antimony (Sb), bismuth (Bi), silicon (Si), phosphorus (P), and boron (B). A content of the element Mb is preferably 0 mol% to 30 mol% with respect to a substance amount of the element Ma.

Examples of the transition metal oxide include transition metal oxides having a bedded salt-type structure, transition metal oxides having a spinel-type structure, lithium-containing transition metal phosphoric acid compounds, lithium-containing transition metal halogenated phosphoric acid compounds, and lithium-containing transition metal silicate compounds.

Examples of the transition metal oxide having a bedded salt-type structure include LiCoO₂ (lithium cobalt oxide [LCO]), LiNi₂O₂ (lithium nickelate), LiNi_{0.85}Co_{0.10}Al_{0.05}O₂ (lithium nickel cobalt aluminum oxide [NCA]), LiNi_{1/3}Co_{1/3}Mn_{1/3}O₂ (lithium nickel manganese cobalt oxide [NMC]), and LiNi_{0.5}Mn_{0.5}O₂ (lithium manganese nickelate).

Examples of the transition metal oxide having a spinel-type structure include LiCoMnO₄, Li₂FeMn₃O₈, Li₂CuMn₃O₈, Li₂CrMn₃O₈, and Li₂NiMn₃O₈.

Examples of the lithium-containing transition metal phosphoric acid compound include an olivine-type iron phosphate salt (for example, LiFePO₄ and Li₃Fe₂(PO₄)₃), a pyrroline phosphate salt (for example, LiFeP₂O₇), a cobalt phosphate salt (for example, LiCoPO₄), and a monoclinic vanadium phosphate salt (for example, Li₃V₂(PO₄)₃ (lithium vanadium phosphate)).

Examples of the lithium-containing transition metal halogenated phosphoric acid compound include an iron fluorophosphate (for example, Li₂FePO₄F), a manganese fluorophosphate (for example, Li₂MnPO₄F), and a cobalt fluorophosphate (for example, Li₂CoPO₄F).

Examples of the lithium-containing transition metal silicate compound include Li₂FeSiO₄, Li₂MnSiO₄, and Li₂CoSiO₄.

The transition metal oxide is preferably a transition metal oxide having a bedded salt-type structure, and more preferably at least one compound selected from the group consisting of LiCoO₂ (lithium cobalt oxide [LCO]), LiNi_{0.85}Co_{0.10}Al_{0.05}O₂ (lithium nickel cobalt aluminum oxide [NCA]), and LiNi_{1/3}Co_{1/3}Mn_{1/3}O₂ (lithium nickel manganese cobalt oxide [NMC]).

The positive electrode active material may be a commercially available product, or may be a synthetic product produced with a known method (for example, a baking method). For example, a positive electrode active material obtained by the baking method may be washed with water, an acidic aqueous solution, an alkaline aqueous solution, or an organic solvent.

In addition, the positive electrode active material may have a carbon coating on the surface thereof.

A shape of the positive electrode active material is not limited, but from the viewpoint of handleability, it is preferably a particle shape.

A volume average particle diameter of the positive electrode active material is not limited, and can be, for example, 0.1 µm to 50 µm. The volume average particle diameter of the positive electrode active material is preferably 0.3 µm to 40 µm and more preferably 0.5 µm to 30 µm.

In a case where the volume average particle diameter of the positive electrode active material is 0.3 µm or more, it is possible to suppress the positive electrode active material from being scattered during handling. In a case where the volume average particle diameter of the positive electrode active material is 40 µm or less, the thickness of the molded body for an electrode can be easily adjusted, and generation of voids in the molding process can be suppressed.

The volume average particle diameter of the positive electrode active material is measured by the following method.

A dispersion liquid containing 0.1% by mass or less of the positive electrode active material is prepared by mixing the positive electrode active material with a solvent (for example, pure water, ethanol, heptane, octane, toluene, or xylene). The dispersion liquid is irradiated with ultrasonic waves of 1 kHz for 10 minutes to be used as a measurement sample. Using a laser diffraction/scattering-type particle size distribution analyzer (for example, LA-960 manufactured by Horiba, Ltd.), data is taken in 50 times under a condition of a temperature of 25°C, and a volume average particle diameter is obtained from a volume frequency-particle size distribution. A quartz cell is used as a cell for the measurement. The above-described measurement is carried out using five samples, and an average of the measured values is defined as the volume average particle diameter of the positive electrode active material. For other detailed conditions, "JIS Z 8828: 2013" is referred to as necessary.

Examples of a method of adjusting the particle diameter of the positive electrode active material include a method of using a pulverizer, a disintegrator, or a classifier. In addition, a known milling method may be applied as the method of adjusting the particle diameter of the positive electrode active material.

Each of the first material and the second powder material may contain only one kind of the positive electrode active material or may contain two or more kinds of the positive electrode active materials.

In addition, even in a case where each of the first material and the second powder material contains one kind of the positive electrode active material, positive electrode active materials having different particle diameters may be used in combination.

### -Negative electrode active material-

The negative electrode active material is not limited, and a known electrode active material used for a negative electrode can be used. The negative electrode active material is preferably a negative electrode active material capable of reversibly intercalating and deintercalating lithium ions.

Examples of the negative electrode active material include a carbonaceous material, a metal oxide (for example, tin oxide), silicon oxide, a metal composite oxide, a lithium single substance, a lithium alloy (for example, a lithium aluminum alloy), and a metal capable of forming an alloy with lithium (for example, Sn, Si, and In). Among the above, from the viewpoint of reliability, the negative electrode active material is preferably a carbonaceous material or a lithium composite oxide.

The carbonaceous material is a material substantially consisting of carbon.

Examples of the carbonaceous material include a carbonaceous material obtained by firing petroleum pitch, carbon black (for example, acetylene black), graphite (for example, natural graphite or artificial graphite (for example, vapor-grown graphite)), hard carbon, and a synthetic resin (for example, polyacrylonitrile (PAN) and a furfuryl alcohol resin). Examples of the carbonaceous material also include carbon fiber (for example, polyacrylonitrile-based carbon fiber, cellulose-based carbon fiber, pitch-based carbon fiber, vapor-grown carbon fiber, dehydrated polyvinyl alcohol (PVA)-based carbon fiber, lignin carbon fiber, vitreous carbon fiber, and activated carbon fiber). Examples of the graphite include mesophase microsphere, graphite whisker, and plate-like graphite.

**In** the present disclosure, the "plate-like" means a shape having two principal planes facing opposite to each other.

The metal composite oxide is preferably a metal composite oxide capable of intercalating and deintercalating lithium.

From the viewpoint of high current density-charging and discharging characteristics, the metal composite oxide capable of intercalating and deintercalating lithium preferably contains at least one element selected from the group consisting of titanium and lithium.

The metal oxide and the metal composite oxide are particularly preferably an amorphous oxide.

The metal oxide and the metal composite oxide are also preferably a chalcogenide. The chalcogenide is a reaction product of a metal element and an element of Group 16 in the periodic table.

Among compound groups consisting of the amorphous oxide and the chalcogenide, an amorphous oxide of a metalloid element or a chalcogenide is preferable, and an oxide containing at least one element selected from the group consisting of elements belonging to Group 13 to Group 15 in the periodic table, Al, Ga, Si, Sn, Ge, Pb, Sb, and Bi, or a chalcogenide is more preferable.

It is also preferable that the negative electrode active material further contains titanium. From the viewpoint that the negative electrode active material containing titanium has excellent high-speed charging and discharging characteristics due to small volume changes during the intercalation and deintercalation of lithium ions, and the suppression of the deterioration of the electrode can improve life of a lithium ion secondary battery, it is preferable that the negative electrode active material containing titanium is lithium titanium oxide (Li₄Ti₅O₁₂ [LTO]).

The negative electrode active material may be a commercially available product, or may be a synthetic product produced with a known method (for example, a baking method). For example, a negative electrode active material obtained by the baking method may be washed with water, an acidic aqueous solution, an alkaline aqueous solution, or an organic solvent.

The negative electrode active material is available, for example, as CGB20 (Nippon Kokuen Group).

The composition of the negative electrode active material is measured by inductively coupled plasma (ICP) emission spectroscopy.

A shape of the negative electrode active material is not limited, but is preferably a particle shape from the viewpoint of ease of handling and ease of managing uniformity in a case of mass production.

A volume average particle diameter of the negative electrode active material is preferably 0.1 µm to 60 µm, more preferably 0.3 µm to 50 µm, and particularly preferably 0.5 µm to 40 µm.

The volume average particle diameter of the negative electrode active material is measured with a method based on the method of measuring the volume average particle diameter of the positive electrode active material described above.

Examples of a method of adjusting the particle diameter of the negative electrode active material include a method of using a pulverizer or a classifier.

Each of the first material and the second powder material may contain only one kind of the negative electrode active material or may contain two or more kinds of the negative electrode active materials.

Surfaces of the positive electrode active material and the negative electrode active material may be coated with a surface coating agent, respectively. Examples of the surface coating agent include a metal oxide containing Ti, Nb, Ta, W, Zr, Si, or Li. Examples of the above-described metal oxide include a titanium oxide spinel, a tantalum-based oxide, a niobium-based oxide, and a lithium niobate-based compound.

### (Electrolytic solution)

The electrolytic solution is not particularly limited, and a known electrolytic solution can be used. Examples of the electrolytic solution include an electrolytic solution containing an electrolyte and a solvent. Specific examples of the electrolytic solution include an electrolytic solution containing a lithium salt compound as the electrolyte and a carbonate compound as the solvent.

Examples of the lithium salt compound include lithium hexafluorophosphate. The electrolytic solution may contain only one kind of the lithium salt compound or may contain two or more kinds of the lithium salt compounds.

Examples of the carbonate compound include a chain-like carbonate compound such as ethyl methyl carbonate (also referred to as EMC), dimethyl carbonate (also referred to as DMC), and diethyl carbonate (DEC); and a cyclic carbonate compound such as ethylene carbonate (also referred to as EC) and propylene carbonate (also referred to as PC). The electrolytic solution may contain only one kind of the carbonate compound, may contain two or more kinds of the carbonate compounds, or may contain a combination of one or more kinds of the chain-like carbonate compounds and one or more kinds of the cyclic carbonate compounds.

As the electrolyte contained in the electrolytic solution, for example, a known inorganic solid electrolyte can also be used.

As a component of the electrolytic solution, for example, an ionic liquid may be used. The ionic liquid may be used as the electrolyte or the solvent.

### (Solvent)

The first material may contain, as the liquid components, a solvent other than the solvent contained as the component of the electrolytic solution (hereinafter, also simply referred to as "solvent").

Examples of the solvent include an alcohol compound solvent, an ether compound solvent, an amide compound solvent, an amino compound solvent, a ketone compound solvent, an aromatic compound solvent, an aliphatic compound solvent, and a nitrile compound solvent.

A boiling point of the solvent at normal pressure (that is, 1 atm) is preferably 50°C or higher, and more preferably 70°C or higher. The upper limit of the boiling point of the solvent at normal pressure (that is, 1 atm) is preferably 250°C or lower, and more preferably 220°C or lower.

The first material may contain only one kind of the solvent or may contain two or more kinds of the solvents.

The liquid component in the first material, that is, the component in the first material, which is in a liquid state at 25°C, is preferably in a liquid state even at -10°C and preferably in a liquid state even at -20°C. That is, the component in the first material, which is in a liquid state at 25°C, is preferably a component which does not solidify at -10°C, and preferably a component which does not solidify at -20°C.

### (Conductive auxiliary agent)

From the viewpoint of improving electron conductivity of the electrode active material, each of the first material and the second powder material preferably contains a conductive auxiliary agent. The conductive auxiliary agent is not limited, and a known conductive auxiliary agent can be used.

The conductive auxiliary agent is included in the solid components.

Examples of the conductive auxiliary agent include graphite (for example, natural graphite and artificial graphite), carbon black (for example, acetylene black, Ketjen black, and furnace black), amorphous carbon (for example, needle coke), carbon fiber (for example, vapor-grown carbon fiber and carbon nanotube), other carbonaceous materials (for example, graphene and fullerene), metal powder (for example, copper powder and nickel powder), metal fiber (for example, copper fiber and nickel fiber), and a conductive polymer (for example, polyaniline, polypyrrole, polythiophene, polyacetylene, and a polyphenylene derivative).

Each of the first material and the second powder material may contain only one kind of the conductive auxiliary agent or may contain two or more kinds of the conductive auxiliary agents.

### (Other components)

Each of the first material and the second powder material may contain a binder, a dispersant, and other additives in addition to the above-described components. However, in both the first material and the second powder material, from the viewpoint of improving the energy density, it is preferable that a content of the binder is low, and it is more preferable that the binder is not contained.

Examples of the binder include a fluorine-containing resin, a hydrocarbon-based thermoplastic resin, an acrylic resin, and a urethane resin.

In addition, the dispersant may be a known dispersant which can disperse a dispersion target.

Furthermore, as the other additives, known additives added to the electrode can be used.

### (Method of preparing first material and second powder material)

The first material can be prepared, for example, by mixing the electrode active material, the electrolytic solution, and other components (for example, the conductive auxiliary agent) used as necessary.

In addition, the second powder material can be prepared, for example, by mixing the electrode active material, and other components (for example, the conductive auxiliary agent) used as necessary.

Examples of the mixing method include a method using a ball mill, a beads mill, a planetary mixer, a blade mixer, a roll mill, a kneader, or a disc mill.

### <<Molded body for sheet-like electrode>>

The molded body for a sheet-like electrode obtained by the manufacturing method of a molded body for an electrode according to the present disclosure can be used as various electrodes. The molded body for a sheet-like electrode may be used as it is as an electrode, or may be further processed to be used as an electrode.

The molded body for a sheet-like electrode is preferably a molded body for an electrode of a semi-solid state secondary battery.

From the viewpoint of improving battery performance (for example, discharge capacity and output characteristics), the thickness of the molded body for a sheet-like electrode is preferably 50 µm to 250 µm and the concentration of solid components is preferably 50% by volume to 80% by volume, same as in the above-described electrode material film having a monolayer structure.

The thickness of the molded body for a sheet-like electrode is measured by the same method as the average thickness of the electrode material film having a monolayer structure. In addition, the concentration of solid components of the molded body for a sheet-like electrode is also calculated by the same method as the concentration of solid components of the electrode material film having a monolayer structure.

The molded body for a sheet-like electrode, obtained by the manufacturing method of a molded body for an electrode according to the present disclosure, is formed on the support, but the support-attached molded body for a sheet-like electrode tends to have high smoothness of the support. This is because, in the manufacturing method of a molded body for an electrode according to the present disclosure, the molded body for a sheet-like electrode having a high concentration of solid components can be manufactured, but a large pressure is not required in the process.

Specifically, in a case where the support is a collector, an arithmetic average roughness Ra of the collector in the molded body for a sheet-like electrode with a collector is preferably 0.1 nm to 1,000 nm and more preferably 1 nm to 30 nm.

In addition, in a case where the support is a collector, the molded body for a sheet-like electrode with a collector tends not to require a coating layer on the surface. In general, the coating layer of the collector is provided in order to make the surface rough. By roughening the surface of the collector, the adhesiveness to the material applied onto the collector can be enhanced. In the manufacturing method of a molded body for an electrode according to the present disclosure, since the first film of the first material containing an electrolytic solution is formed on the collector as the support, the effect of adhesion to the collector is exhibited by the action of the electrolytic solution, and thus the coating layer in the collector is not required.

Therefore, in a case where the support is a collector, it is preferable that the collector in the molded body for a sheet-like electrode with a collector does not have a coating layer.

Furthermore, in the molded body for a sheet-like electrode, a content of a conductive auxiliary agent having a needle-like shape or a fibrous shape tends to be high. In order to manufacture the molded body for a sheet-like electrode, which has a high concentration of solid components and has no unevenness in the concentration of solid components, an electrode material which contains a large amount of solid components such as a conductive auxiliary agent and an electrode active material and contains a small amount of an electrolytic solution is often used after being uniformly dispersed by applying a very high pressure. Due to the high pressure during the dispersion treatment, the needle-like shape or the fibrous shape of the conductive auxiliary agent is destroyed (for example, cut), and thus the conductive auxiliary agent having a needle-like shape or a fibrous shape remaining in the obtained molded body for a sheet-like electrode is small. In the manufacturing method of a molded body for an electrode according to the present disclosure, since the above-described first material containing a larger amount of the electrolytic solution than the electrode material can be used, the pressure for uniformly dispersing the components constituting the first material can be reduced. As a result, in the molded body for a sheet-like electrode manufactured by the manufacturing method of a molded body for an electrode according to the present disclosure, the content of the conductive auxiliary agent having a needle-like shape or a fibrous shape is increased.

### Examples

Hereinafter, the present disclosure will be described in detail with reference to Examples, but the present disclosure is not limited thereto.

Each step in each example described later was performed in a dry room (low-dew point room) at 22°C.

### [Preparation of first material (1-1) for positive electrode]

(1) LiPF₆ (electrolyte) was mixed with a mixed solution obtained by mixing ethylene carbonate (EC), propylene carbonate (PC), and diethyl carbonate (DEC), and then vinylene carbonate (VC) was further mixed therewith; 64 g of the obtained mixed solution was taken out, and used as an electrolytic solution X1.
(2) 1 g of a conductive auxiliary agent (Ketjen black) and 80 g of a positive electrode active material (iron phosphate) were stirred at 1,500 revolutions per minute (rpm; the same applies hereinafter) for 30 seconds with a mixer (AWATORI RENTARO ARE-310, manufactured by THINKY Corporation) to prepare a kneaded material Y1 (81 g).
(3) The electrolytic solution X1 (64 g) was added to the kneaded material Y1 (81 g), and the mixture was stirred at 1,500 rpm for 120 seconds with a mixer (AWATORI RENTARO ARE-310, manufactured by THINKY Corporation) to obtain a first material (1-1) for a positive electrode.

In the obtained first material (1-1) for a positive electrode, a volume ratio of the solid components and the liquid components was 31:69. That is, a concentration of solid components of the first material (1-1) for a positive electrode was 31% by volume.

### [Preparation of first material (1-2) for positive electrode]

(1) An electrolytic solution X1 (64 g) was obtained in the same manner as in the preparation of the first material (1-1) for a positive electrode.
(2) 0.4 g of a conductive auxiliary agent (Ketjen black) and 34.1 g of a positive electrode active material (iron phosphate) were stirred at 1,500 (rpm) for 30 seconds with a mixer (AWATORI RENTARO ARE-310, manufactured by THINKY Corporation) to prepare a kneaded material Y2 (34.5 g).
(3) The electrolytic solution X1 (64 g) was added to the kneaded material Y2 (34.5 g), and the mixture was stirred at 1,500 rpm for 120 seconds with a mixer (AWATORI RENTARO ARE-310, manufactured by THINKY Corporation) to obtain a first material (1-2) for a positive electrode.

In the obtained first material (1-2) for a positive electrode, a volume ratio of the solid components and the liquid components was 15:85. That is, a concentration of solid components of the first material (1-2) for a positive electrode was 15% by volume.

### [Preparation of second powder material (2-1) for positive electrode]

1 g of a conductive auxiliary agent (Ketjen black) and 80 g of a positive electrode active material (iron phosphate) were stirred at 1,500 (rpm) for 30 seconds with a mixer (AWATORI RENTARO ARE-310, manufactured by THINKY Corporation) to obtain a second powder material (2-1) for a positive electrode.

A concentration of solid components of the obtained second powder material (2-1) for a positive electrode was 100% by volume.

### [Preparation of support]

Support (S1): positive electrode collector (aluminum foil, average thickness: 20 µm, Ra: 0.5 µm)
Support (S2): support (Ra of a surface of a collector foil: 0.5 µm) in which two collector foils (150 mm × 200 mm × 20 µm (thickness)) were attached to a resin film (270 mm × 500 mm × 20 µm (thickness)) with the collector foils spaced apart from each other by 40 mm, a resin film portion between the collector foils was bent to a side opposite to the collector foil side, and the collector foils spaced apart from each other were bonded without a gap
The Ra of the collector described above refers to an arithmetic average roughness Ra on a surface on which the electrode material film is formed.

### [Preparation of molding member]

Blade (B1): blade made of stainless steel

### <Example 1>

The first material (1-1) for a positive electrode was applied onto the support (S1) being continuously transported using a doctor blade to form a first film having a thickness of 100 µm.

Next, the second powder material (2-1) pumped with a screw feeder manufactured by KUBOTA Corporation was applied onto the first film using an electromagnetic feeder to form a second film.

Subsequently, as in the example shown in Fig. 2, the second film (second powder material) was leveled using the blade (B1) capable of ultrasonic vibration.

Specifically, the blade 40 was disposed such that a distance between the surface of the support 10 and the distal end of the blade 40 was 200 µm. The blade 40 was connected to an ultrasonic oscillator and a phone of SEIDENSHA ELECTRONICS CO.,LTD to enable the ultrasonic vibration. Next, as shown in Fig. 2, the support 10 was transported and moved in the arrow X direction, and the laminated product of the first film 24 and the second film 34 formed on the support 10 was brought into contact with the blade 40 which was ultrasonically vibrating, and passed through the void. By passing through the void, the thickness of the laminated product of the first film 24 and the second film 34 was regulated such that the second film 34 having a thickness of 100 µm was formed on the first film 24 having a thickness of 100 µm. In this case, the amplitude of the vibration of the blade which vibrated by ultrasonic waves was 1 µm, and the frequency was 35 kHz.

As a result, the electrode material film 50 having a monolayer structure, which was a continuous film, was formed on the support 10 along the transport direction (arrow X direction) of the support 10. The obtained electrode material film 50 had a film thickness of 200 µm.

Subsequently, first, a vibration roller in which a turbine vibrator (UT322, EXEN Corp.) was mounted on an SUS roller having a diameter of 100 mm was prepared. As shown in Fig. 4, after the electrode material film 50 obtained as described above was placed on a stand, the prepared vibration roller was pressed against the electrode material film 50 while vibrating, and moved relative to the surface of the support 10 to pressurize and compress the electrode material film 50. At this time, the amplitude of the vibration of the vibration roller was 10 µm, and the frequency was 400 Hz.

A film thickness of the electrode material film 52 after the pressurization and compression was 190 µm, and a concentration of solid components was 65.5% by volume.

### <Example 2>

The first material (1-2) for a positive electrode was applied onto the support (S1) being continuously transported using a doctor blade to form a first film having a thickness of 80 µm.

Subsequently, the second powder material (2-1) pumped with a screw feeder manufactured by KUBOTA Corporation was applied onto the first film using an electromagnetic feeder to form a second film.

Next, as in the example shown in Fig. 2, the second film (second powder material) was leveled using the blade (B1) capable of ultrasonic vibration, same as in Example 1. Specifically, the blade 40 was disposed such that a distance between the surface of the support 10 and the distal end of the blade 40 was 200 µm. Next, as shown in Fig. 2, the support 10 was transported and moved in the arrow X direction, and the laminated product of the first film 24 and the second film 34 formed on the support 10 was brought into contact with the blade 40 which was ultrasonically vibrating, and passed through the void. By passing through the void, the thickness of the laminated product of the first film 24 and the second film 34 was regulated such that the second film 34 having a thickness of 120 µm was formed on the first film 24 having a thickness of 80 µm. In this case, the amplitude of the vibration of the blade which vibrated by ultrasonic waves was 1 µm, and the frequency was 35 kHz.

Subsequently, the electrode material film 50 was pressurized and compressed using the vibration roller under the same conditions as in Example 1.

A film thickness of the electrode material film 52 after the pressurization and compression was 190 µm, and a concentration of solid components was 65.5% by volume.

### <Example 3>

An electrode material film 50 having a film thickness of 200 µm was obtained by the same method as in Example 1, and then the electrode material film 50 was pressurized and compressed by the following method using a roll press machine (SA-602 manufactured by TESTER SANGYO CO,. LTD.).

First, the roll press machine was disposed such that a distance between the surface of the support and the outer periphery of the roll press machine was 190 µm. Next, the support was transported and moved, and the electrode material film 50 formed on the support was brought into contact with the roll press machine and passed through a gap at 10 mm/s to be pressurized and compressed.

A film thickness of the electrode material film 52 after the pressurization and compression was 190 µm, and a concentration of solid components was 65.5% by volume.

### <Example 4>

An electrode material film 50 having a film thickness of 200 µm was obtained by the same method as in Example 1, and then the electrode material film 50 was pressurized and compressed by the following method using a blade which vibrated by ultrasonic waves.

First, a blade which vibrated by ultrasonic waves was produced using an ultrasonic oscillator (DGS35-100-S, UC Japan Co., Ltd.) and a converter (C35-SD8, UC Japan Co., Ltd.). The produced blade was disposed such that a distance between the surface of the support and the distal end of the blade was 190 µm. Next, the support was transported and moved, and the electrode material film 50 formed on the support was brought into contact with the blade which was ultrasonically vibrating to pass through the void. In this case, the amplitude of the vibration of the blade which vibrated by ultrasonic waves was 1 µm, and the frequency was 35 KHz.

A film thickness of the electrode material film 52 after the pressurization and compression was 190 µm, and a concentration of solid components was 65.5% by volume.

### <Example 5>

An electrode material film 50 having a film thickness of 200 µm was obtained by the same method as in Example 1, and then the electrode material film 50 was pressurized and compressed by the following method using a blade which vibrated.

First, a resin film made of PTFE was placed on the electrode material film 50, and the blade which vibrated by ultrasonic waves was brought into contact with the resin film in the same manner as in Example 4, and the electrode material film 50 was pressurized and compressed. Specifically, the blade which vibrated by ultrasonic waves was disposed such that a distance between the surface of the support and the distal end of the blade was 190 µm. Next, the support was transported and moved, and the electrode material film 50 formed on the support was brought into contact, through the PTFE film, with the blade which was ultrasonically vibrating to pass through the void. In this case, the amplitude of the vibration of the blade which vibrated by ultrasonic waves was 1 µm, and the frequency was 35 KHz.

As a result, the electrode material film 50 having a monolayer structure, which was a continuous film, was formed on the support 10 along the transport direction (arrow X direction) of the support 10. The obtained electrode material film 50 had a film thickness of 190 µm.

### <Example 6>

The first material (1-1) for a positive electrode was applied onto the collector foil of the support (S2) using a doctor blade to form a first film having a thickness of 100 µm. Next, the second powder material (2-1) pumped with a screw feeder manufactured by KUBOTA Corporation was applied onto the first film using an electromagnetic feeder to form a second film.

Thereafter, the resin film of the support (S2) was pulled, and the two sheets of the laminated collector foil were separated. After the separation of the current collector foil, the shape of the laminated product of the first film and the second film on the collector foil was observed with a CCD camera, and no collapsed portion was observed.

Thereafter, using the same method as in Example 1, the second film (second powder material) formed on the first film of the collector foil was leveled using the blade (B1) which was ultrasonically vibrating, and the thickness of the laminated product of the first film and the second film was regulated so that the second film having a thickness of 100 µm was formed on the first film having a thickness of 100 µm. As a result, an electrode material film having a monolayer structure, which was a continuous film, was formed on each of the two collector foils.

Subsequently, the electrode material film was pressurized and compressed using the vibration roller under the same conditions as in Example 1.

A film thickness of the electrode material film after the pressurization and compression was 190 µm, and a concentration of solid components was 65.5% by volume. The electrode material film after the pressurization and compression was also not found to be collapsed.

### <Evaluation>

### (Evaluation of unevenness in concentration of solid components in in-plane direction)

The thickness of the formed electrode material film was measured with a multi-color laser displacement meter manufactured by KEYENCE CORPORATION; and it was confirmed that the thicknesses were the same (here, an error of 5 µm or less was defined as "same thickness").

The electrode material film having a measured thickness was punched at 100 locations in total, 10 locations in a width direction and 10 locations in a longitudinal direction, using a punching machine having a 2 cm square, thereby obtaining 100 samples having a 2 cm square.

Next, the mass of each of the obtained 100 samples was measured with an electronic balance.

An arithmetic mean value was obtained from the obtained measured values, and used as a reference mass. The number of samples having a mass of 5% by mass or less with respect to the reference mass was counted, and the evaluation was performed with the number of the counted samples. As the number of counted samples was larger, the unevenness of the concentration of solid components in the in-plane direction was smaller. The results are shown in Table 1.

The evaluation standard was as follows.

### -Evaluation standard-

A: number of counted samples was 95 or more.
B: number of counted samples was 90 or more and 94 or less.
C: number of counted samples was 85 or more and 89 or less.
D: number of counted samples was 84 or less.

**[Table 1]**

| | First step | | Second step | | | Third step (compression step) | | Evaluation result |
|---|---|---|---|---|---|---|---|---|
| | Support | First material | Second powder material | Molding member | Existence of vibration | Pressurizing member | Existence of vibration | |
| Example 1 | (S1) | (1-1) | (2-1) | Blade (B1) | Y | Vibrating roller | Y | B |
| Example 2 | (S1) | (1-2) | (2-1) | Blade (B1) | Y | Vibrating roller | Y | C |
| Example 3 | (S1) | (1-1) | (2-1) | Blade (B1) | Y | Roll press machine | N | C |
| Example 4 | (S1) | (1-1) | (2-1) | Blade (B1) | Y | Ultrasonic vibration blade | Y | B |
| Example 5 | (S1) | (1-1) | (2-1) | Blade (B1) | Y | Ultrasonic vibration blade (+ resin film) | Y | A |
| Example 6 | (S2) | (1-1) | (2-1) | Blade (B1) | Y | Vibrating roller | Y | B |

As described above, according to each of Examples, it was found that a molded body for a sheet-like electrode having a monolayer structure, in which the concentration of solid components was high and the unevenness of the concentration of solid components in the in-plane direction was small, was produced on the support.

### Explanation of References

10: support
20: applying unit
22: first material
24: first film
30: applying unit
32: second powder material
34: second film
40: blade
50: electrode material film having monolayer structure
52: electrode material film having pressurized monolayer structure
60: roller
62: film
70: pressurization roller
72: film
X: transport direction of support

The disclosure of JP2022-120969 filed on July 28, 2022 is incorporated in the present specification by reference. All documents, patent applications, and technical standards described in the present specification are incorporated herein by reference to the same extent as in a case of being specifically and individually noted that individual documents, patent applications, and technical standards are incorporated herein by reference.

## Claims

1. A manufacturing method of a molded body for a sheet-like electrode, the manufacturing method comprising:
a first step of applying a first material comprising an electrode active material and an electrolytic solution onto a support to form a first film of the first material; and
a second step of applying a second powder material comprising an electrode active material and comprising no liquid component onto the first film,
wherein an electrode material film having a monolayer structure, which is a mixture of the first film and the second powder material, is formed.

2. The manufacturing method of a molded body for a sheet-like electrode according to claim 1,
wherein the second step is a step of applying the second powder material comprising an electrode active material and comprising no liquid component onto the first film, and then leveling the second powder material applied onto the first film by a molding member to regulate a thickness of a laminated product of the first film and the second powder material.

3. The manufacturing method of a molded body for a sheet-like electrode according to claim 2,
wherein the molding member is a blade or a roller.

4. The manufacturing method of a molded body for a sheet-like electrode according to claim 2,
wherein, in the second step, the second powder material applied onto the first film is leveled by a vibrating blade or roller.

5. The manufacturing method of a molded body for a sheet-like electrode according to claim 1,
wherein the second step is a step of applying the second powder material comprising an electrode active material and comprising no liquid component onto the first film, placing a film on the second powder material applied onto the first film, and then pressing the second powder material from above the film by a molding member to level the second powder material applied onto the first film and regulate a thickness of a laminated product of the first film and the second powder material.

6. The manufacturing method of a molded body for a sheet-like electrode according to claim 2 or 5, further comprising:
a third step of compressing the laminated product with a regulated thickness, which is obtained in the second step by leveling the second powder material applied onto the first film to regulate the thickness of the first film and the second powder material, with a vibrating pressurizing member.

7. The manufacturing method of a molded body for a sheet-like electrode according to claim 1 or 2,
wherein a concentration of solid components of the first material is 5% by volume to 48% by volume.

8. The manufacturing method of a molded body for a sheet-like electrode according to claim 1 or 2,
wherein the electrode material film having a monolayer structure has a thickness of 50 µm to 250 µm and a concentration of solid components of 50% by volume to 80% by volume.
